# EUROPÄISCHE PATENTANMELDUNG

(11) **EP 0 894 842 A1**
(43) Veröffentlichungstag der Anmeldung: **03.02.1999**
(21) Anmeldenummer: 98202506.6
(22) Anmeldetag: 27.07.1998
(51) Int. Cl.: C09K 11/02

(54) **Herstellung einer Leuchtstoffzubereitung mit Hämatit**

(30) Priorität: 02.08.1997 DE 19733585
(71) Anmelder: Philips Patentverwaltung GmbH, 22335 Hamburg (DE); Koninklijke Philips Electronics N.V., 5621 BA Eindhoven (NL)
(72) Erfinder: Bredol, Michael, Dr., Röntgenstrasse 24, 22335 Hamburg (DE); Merikhi, Jacqueline, Röntgenstrasse 24, 22335 Hamburg (DE); Wädow, Dieter, Röntgenstrasse 24, 22335 Hamburg (DE); Köhler, Irmgard, Röntgenstrasse 24, 22335 Hamburg (DE)
(74) Vertreter: Volmer, Georg, Dipl.-Ing.

(57) **Zusammenfassung**

Verfahren zur Herstellung einer Leuchtstoffzubereitung aus einem Leuchtstoff mit einer Pigmentbeschichtung aus Hämatit, bei welchem in einem ersten Schritt der Leuchtstoff mit einer eisenhaltigen Ausgangsverbindung für Hämatit beschichtet wird, und in einem zweiten Schritt der Leuchtstoff mit der Beschichtung (1) kalziniert wird, wobei die eisenhaltige Ausgangsverbindung für Hämatit in Hämatit umgewandelt wird, wobei in einer Atmosphäre aus einem Gasgemisch aus Wasserdampf und einem oxidierenden Gas (2) kalziniert wird.

## Beschreibung

Die vorliegende Erfindung betrifft ein Verfahren zur Herstellung einer Leuchtstoffzubereitung aus einem Leuchtstoff, insbesondere einem Leuchtstoff für Farbbildschirme und Farbmonitore, mit einer Pigmentbeschichtung aus Hämatit, bei welchem in einem ersten Schritt der Leuchtstoff mit einer eisenhaltigen Ausgangsverbindung für Hämatit beschichtet wird, und in einem zweiten Schritt der Leuchtstoff mit der Beschichtung kalziniert wird, wobei die eisenhaltige Ausgangsverbindung in Hämatit umgewandelt wird.

Farbbildschirme und Farbmonitore werden häufig in hellem Umgebungslicht benutzt. Um das Schirmbild bei dieser Beleuchtung besser sichtbar zu machen und die Augen weniger zu ermüden, soll ein Bildschirm blendungsfrei und reflexionsarm sein. Außerdem soll das Schirmbild möglichst kontrastreich sein.

Den Kontrast kann man steigern, indem man den Außenlichteinfluß im Vergleich zur Eigenlichtdichte der Leuchtstoffpunkte vermindert. Dazu beschichtet man die Bildschirmfläche oder die Leuchtstoffpartikel mit Farbfiltern in Form von anorganischen Pigmenten, die so ausgewählt werden, daß sie die vom jeweiligen Leuchtstoff emittierte Farbe möglichst durchlassen und die restlichen Spektralanteile absorbieren. Durch diese Farbfilterpigmente wird die diffuse Reflexion des Außenlichtes am Leuchtstoff unterdrückt.

Rot lumineszierende Leuchtstoffe beschichtet man zur Kontraststeigerung üblicherweise mit Hämatit, α-Fe₂O₃. Im Falle der rotlumineszierenden Europium-dotierten Leuchtstoffe ist die Hämatitpigmentierung zudem nützlich, um unerwünschte kurzwellige Emissionslinien wegzufiltern. Der mit Hämatit pigmentierte Europium-dotierte Leuchtstoff weist einen stärker gesättigten Emissionsfarbton auf.

Hämatit kann mit organischen oder anorganischen Bindemitteln auf die Leuchtstoffpartikel aufgeklebt werden. Andererseits kann er auch durch ein Verfahren auf das Leuchtstoffpulver aufgebracht werden, bei dem der Hämatit oder eine geeignete Ausgangsverbindung für Hämatit direkt auf den Leuchtstoffpartikeln ausgefällt wird. Durch einen Heizschritt wird anschließend der frischgefällte Hämatit bzw. die Ausgangsverbindung für Hämatit in mikrokristallines Hämatit-Pigment überführt. Durch ein solches Verfahren der "chemischen Pigmentierung", bei dem das Hämatit-Pigment direkt chemisch auf der Oberfläche des Leuchtstoffes erzeugt wird, erhält man eine verbesserte Haftung und damit auch eine bessere Abriebfestigkeit der Leuchtstoffzubereitung unter den Fabrikationsbedingungen für den Bildschirm.

Aus der DE-A-29 39 258 ist ein Verfahren zur Herstellung von rotlumineszierenden Leuchtstoffen mit anhaftendem Pigment bekannt, das dadurch gekennzeichnet ist, daß a) in einer ersten Stufe auf den Leuchtstoff ein ein Ausgangsmaterial aufgetragen wird, das durch Kalzinieren in ein rotes Pigment übergeht, und b) in einer zweiten Stufe der Leuchtstoff mit dem aufgetragenen Ausgangsmaterial kalziniert und das Ausgangsmaterial in das entsprechende Pigment umgewandelt wird. Das Ausgangsmaterial für das rote Pigment kann als ein Oxid oder Hydroxid bzw. Oxidhydrat oder ein Phosphat des zweiwertigen oder des dreiwertigen Eisens oder als ein Gemisch solcher Verbindungen aufgetragen werden. Ein derartiges Verfahren führt jedoch zu hämatitbeschichteten Leuchtstoffen, die niedrige LCP-Werte ("luminescence contrast performance") haben, weil das so hergestellte Pigment auch im Emissionsbereich des Leuchtstoffes und zuwenig von dem grün-blauen Bereich des Umgebungslichtes absorbiert.

Es ist daher die Aufgabe der vorliegenden Erfindung, ein schonendes Verfahren zur Herstellung von Leuchtstoffzubereitung aus einem Leuchtstoff mit Hämatit anzugeben, das zu einer Leuchtstoffzubereitung mit fest haftendem Hämatit führt, die hohe optische Güte hat.

Erfindungsgemäß wird die Aufgabe gelöst durch ein Verfahren zur Herstellung einer Leuchtstoffzubereitung aus einem Leuchtstoff mit einer Pigmentbeschichtung aus Hämatit, bei welchem in einem ersten Schritt der Leuchtstoff mit einer eisenhaltigen Ausgangsverbindung für Hämatit beschichtet wird und in einem zweiten Schritt der Leuchtstoff mit der Beschichtung kalziniert wird, wobei die eisenhaltige Ausgangsverbindung in Hämatit umgewandelt wird, bei dem in einer Atmosphäre aus einem Gasgemisch aus Wasserdampf und einem oxidierenden Gas kalziniert wird.

Durch ein derartiges Herstellungsverfahren erhält man eine Leuchtstoffzubereitung mit hohen LCP - Werten, d.h. mit niedriger Absorption im Emissionsbereich des Leuchtstoffes und vollständiger Absorption des grünen und grün-blauen Bereiches des Umgebungslichtes. Das Kalzinieren in einem Gasgenisch aus Wasserdampf und einem oxidierenden Gas hat weiterhin einen positiven Einfluß auf die Güte der Kristalloberflächen des Leuchtstoffes und verbessert auch dadurch die Lumineszenzeffizienz. Das Verfahren arbeitet schonend, es vermindert die thermische und mechanische Belastung des Leuchtstoffes, die mit Verlusten an Lumineszenzeffizienz einhergeht. Es verhütet die partielle Reduktion des Hämatits und damit dessen Vergrauung.

Im Rahmen der vorliegenden Erfindung ist es bevorzugt, daß die eisenhaltige Ausgangsverbindung für Hämatit ein Oxid, Hydroxid, Oxidhydrat, Sulfid oder Phosphat des zweiwertigen oder dreiwertigen Eisens oder einem Gemisch solcher Verbindungen ist.

Es ist weiterhin bevorzugt, daß das oxidierende Gas Luft, Sauerstoff, nitrose Gase oder ein sauerstoffhaltiges Gasgemisch ist.

Es ist besonders bevorzugt, daß in einer Atmosphäre aus strömendem Gasgemisch kalziniert wird.

Üblicherweise wird das Verfahren so durchgeführt, daß in dem Gasgemisch der Wasserdampfpartialdruck ≥ 25% des Gesamtdruckes beträgt.

Besonders bevorzugt ist es, daß in dem Gasgemisch der Wasserdampfpartialdruck 60 bis 80 % des Gesamtdruckes beträgt.

Nachfolgend wird die Erfindung anhand von Ausführungsbeispielen und von drei Figuren weiter erläutert.
- **Fig. 1**: zeigt schematisch eine Versuchsanordnung für das erfindungsgemäße Kalzinierungsverfahren.
- **Fig. 2**: zeigt die diffusen Reflektionsspektren der Leuchtstoffzubereitungen gemäß Ausführungsbeispiel 1 bis 3 **(5)**, des Vergleichsbeispiels **(4)** und von unpigmentiertem Y₂O₂S:Eu.
- **Fig. 3**: zeigt die a/s-Spektren der Leuchtstoffzubereitungen gemäß Ausführungsbeispiel 1 bis 3 **(5)**, des Vergleichsbeispiels **(4)** und von unpigmentiertem Y₂O₂S:Eu.

Das erfindungsgemäße Verfahren wird insbesondere zur Herstellung von Leuchtstoffzubereitungen mit rotlumineszierenden Leuchtstoffen verwendet. Als rotlumineszierende Leuchtstoffe eignen sich alle üblichen rotlumineszierenden Leuchtstoffe, wie beispielsweise Y₂O₂S:Eu, Y₂O₃:Eu und YVO₄.

Diese oder andere Leuchtstoffe werden mit einer eisenhaltigen Ausgangsverbindung für Hämatit beschichtet. Als eisenhaltige Ausgangsverbindung wird bevorzugt ein basisches Eisenoxid gewählt. Es kam aber auch ein anderes Oxid, Hydroxid, Oxidhydrat, Sulfid oder Phosphat des zweiwertigen oder dreiwertigen Eisens oder ein Gemisch solcher Verbindungen sein.

Diese eisenhaltige Ausgangsverbindung wird bevorzugt durch eine homogene chemische Präzipitationsreaktion direkt auf der Oberfläche des Leuchtstoffes erzeugt.

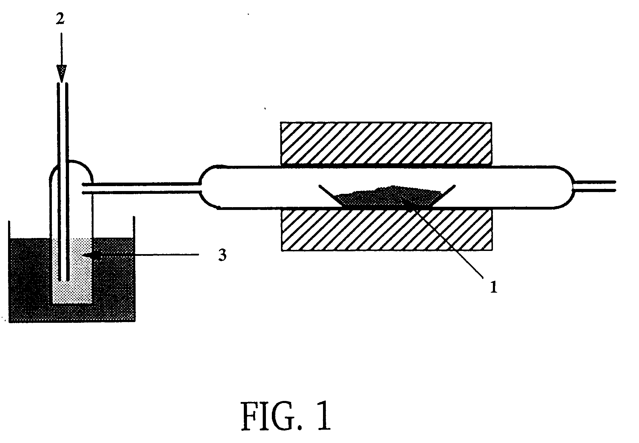

Die anschließende Kalzination unter leicht oxidierenden Bedingungen kann in einer Apparatur gemäß **Fig. 1** durchgeführt werden. Das mit einer eisenhaltigen Ausgangsverbindung beschichtete Leuchtstoffpulver **(1)** wird in dünner Schicht in einem Korundschiffchen o.ä. ausgebreitet und in ein beiderseits offenes Rohr, das von einem Röhrenofen umgeben ist, eingesetzt. Die Atmosphäre aus einem Gasgemisch aus Wasserdampf und einem oxidierenden Gas **(2)** für die Kalzination kann erzeugt werden, indem man das oxidierende Gas in kontrolliertem Strom durch temperiertes Wasser **(3)** leitet. Das oxidierende Gas wird dadurch bis zum Gleichgewichtspartialdruck mit Wasserdampf gesättigt. Bevorzugte Temperaturen des Wasservorrates zur Befeuchtung des oxidierenden Gases liegen zwischen 70°C und 100°C. In diesem Bereich variiert der Dampfdruck zwischen 0,3 und ein Bar. Es können auch Temperaturen oberhalb 100°C für den Wasservorrat zur Befeuchtung des oxidierenden Gases angewendet werden, wenn in einer geschlossenen Apparatur unter Überdruck gearbeitet wird. Die Strömungsgeschwindigkeit ist nicht kritisch.

Die Leuchtstoffzubereitung wird dann in dem Gasgemisch unter einer üblichen Temperaturkurve kalziniert. Dabei wird die eisenhaltige Ausgangsverbindung in das mikrokristalline Hämatit-Pigment überführt.

### Ausführungsbeispiel 1

200 g frisch hergestelltes und vom Schmelzsalz befreites Y₂O₂S:Eu- Leuchtstoffpulver wird 4h zusammen mit Mahlkörper aus Nylonstäbchen in ammoniakalischer Losung desagglomeriert bei pH=9. Der Mahlkörper wird abgesiebt und der pH-Wert der Suspension unter weiterem Rühren mit verdünnter Salpetersäure auf H=5 abgesenkt. Des weiteren wird eine Lösung vorbereitet, die in etwa 200 ml Wasser 13.3 mmol Fe(NO₃)₃ 9H₂O, 52,4 mmol Oxalsäure und 833 mmol Harnstoff enthält. Der pH-Wert dieser Lösung wird ebenfalls auf 5 eingestellt. Die so vorbereitete Eisen-oxalato-Lösung wird unter kräftigem Rühren zu der Leuchtstoffsuspension gegeben und das Reaktionsgemisch wird auf ein Volumen von 21 aufgefüllt. Daraufhin wird die Suspension auf 90°C erhitzt und mindestens 2h bei dieser Temperatur unter ständigem Rühren gehalten. Danach wird der beschichtete Leuchtstoff durch Filtration abgetrennt, mehrfach mit deionisiertem Wasser gewaschen und schließlich bei 120°C an Luft getrocknet. Durch diese homogene Präzipitationsreaktion ist der Leuchtstoff mit Fe(OH)₃ beschichtet.

Das beschichtete Leuchtstoffmaterial wird trocken in ein Korundschiffchen eingefüllt und in ein Glasrohr in einem Röhrenofen eingesetzt. Das Glasrohr wird an eine Gaswaschflache angeschlossen, die mit 90°C heißem Wasser gefüllt ist. Es wird Luft in die Gaswaschflache eingeleitet und die mit Wasserdampf beladene Luft über den beschichteten Leuchtstoff geleitet. Der Leuchtstoff wird unter feuchter Luft auf 390°C aufgeheizt, 2h bei dieser Temperatur gehalten, dann abgekühlt. Durch diese Wärmebehandlung in einem Luft-Wasserdampf-Gemisch wird Fe(OH)₃ in Hämatit umgewandelt.

### Ausführungsbeispiel 2

Der Y₂O₂S:Eu-Leuchtstoff wird wie in Ausführungsbeispiel 1 durch homogene Präzipitation mit 0,52 Gewichts-% Fe(OH)₃-Pigment beschichtet. Das beschichtete Leuchtstoffmaterial wird trocken in ein Korundschiffchen eingefüllt und in ein Glasrohr in einem Röhrenofen eingesetzt. Das Glasrohr wird an eine Gaswaschflache angeschlossen, die mit 80°C heißem Wasser gefüllt ist. Es wird Luft in die Gaswaschflache eingeleitet und die mit Wasserdampf beladene Luft über den beschichteten Leuchtstoff geleitet. Der Leuchtstoff wird unter feuchter Luft auf 390°C aufgeheizt, 2h bei dieser Temperatur gehalten, dann abgekühlt.

### Ausführungsbeispiel 3

Der Y₂O₂S:Eu - Leuchtstoff wird wie in Ausführungsbeispiel 1 durch homogene Präzipitation mit 0,52 Gewichts-% Fe(OH)₃-Pigment beschichtet.

Das beschichtete Leuchtstoffmaterial wird trocken in ein Korundschiffchen eingefüllt und in ein Glasrohr in einem Röhrenofen eingesetzt. Das Glasrohr wird an eine Gaswaschflache angeschlossen, die mit kochendem Wasser gefüllt ist. Es wird Luft in die Gaswaschflache eingeleitet und die mit Wasserdampf beladene Luft über den beschichteten Leuchtstoff geleitet. Der Leuchtstoff wird unter feuchter Luft auf 390°C aufgeheizt, 2h bei dieser Temperatur gehalten, dann abgekühlt.

### Vergleichsbeispiel

Der Y₂O₂S:Eu-Leuchtstoff wird wie in Ausführungsbeispiel 1 durch homogene Präzipitation mit 0,52 Gewichts-% Fe(OH)₃ - Pigment beschichtet. Das beschichtete Leuchtstoffmaterial wird trocken in ein Korundschiffchen eingefüllt und in ein Glasrohr in einem Röhrenofen eingesetzt. Es wird trockene Luft über den beschichteten Leuchtstoff geleitet. Der Leuchtstoff wird unter einem trockenem Luftstrom auf 390°C aufgeheizt, 2h bei dieser Temperatur gehalten, dann abgekühlt.

### Charakterisierung

Der Kontrast einer Farbbildröhre oder eines Farbmonitors wird anhand der "luminance contrast performance" (LCP) bewertet. Diese wird als Quotient aus der Luminanz einer Bildröhre zu der Wurzel aus der diffusen Reflektion dieser Röhre berechnet.

Zur Charakterisierung des pigmentierten Leuchtstoffpulvers, das noch nicht zu einer Bildschirmbeschichtung weiterverarbeitet worden ist, wird der Quotient R(6500) aus der Lumineszenzeffizienz und der Wurzel der diffusen Reflektion einer spezifischen Lichtquelle, der Schwarzkörperstrahlung von 6500 K, durch eine dicke Leuchtstoffpulverschicht verwendet.

Die Messung der diffusen Reflektivität einer dicken Leuchtstoffpulverschicht wird auch dazu benutzt, die Absorptionsstärke des Materials abzuschätzen. Es wird das Verhältnis a/s von Absorptionskoeffizient zu Streukoeffizient des pigmentierten Leuchtstoffpulvers gemessen. Daraus kann direkt auf die jeweilige Absorptionskraft geschlossen werden. Die Angabe von a/s bei einer Wellenlänge von 450 nm, bei der das Pulver stark absorbiert, ist daher geeignet, die Güte der Leuchtstoffzubereitungen relativ zueinander zu beurteilen.

**Tabelle 1**

| **Kolorimetrische Daten und Ausbeutedaten** | | | | | | | |
|---|---|---|---|---|---|---|---|
| Nr. | Bemerkung | x | y | R(6500) | Ausbeute | LCP | a/s (450 nm) |
| 1 | Kontrolle | 0.669 | 0.326 | 34.44 | 100 | 100 | 1.783 |
| 3 | T=80°C | 0.669 | 0.326 | 31.91 | 100.8 | 105 | 2.146 |
| 4 | T=90°C | 0.670 | 0.326 | 30.50 | 102.3 | 109 | 2.372 |
| 5 | kochend | 0.669 | 0.326 | 31.22 | 99.2 | 104 | 2.290 |

Tab. 1 gibt eine Übersicht über die kolorimetrischen und Ausbeutedaten der in den Ausführungsbeispielen und dem Vergleichsbeispiel näher beschriebenen Versuche. Es wird deutlich, daß sich durch das erfindungsgemäße Herstellungsverfahren die Absorptionskraft der Leuchtstoffzubereitung bei 450 nm um bis zu 33 % steigern laßt, was sich in einer Steigerung des LCP-Wertes bis zu 9% niederschlägt.

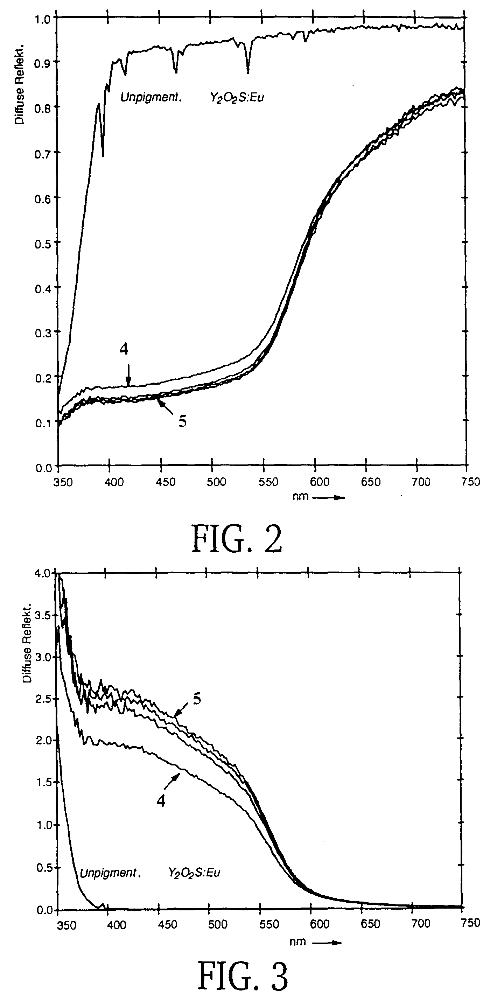

**Fig. 2** zeigt die Diffusen Reflektionsspektren der in Tab. 1 angegebenen Leuchtstoffzubereitungen. Durch die Behandlung in Gasgemischen aus Wasserdampf und einem oxidierenden Gas geht die diffuse Reflektivität im absorbierenden Bereich deutlich zurück, was sich auch im in Tab. 1 mit R(6500) bezeichneten Rückgang der Reflektion von Schwarzkörperstrahlung (T=6500 K) äußert. Der spektrale Bereich der Rot-Emission des Leuchtstoffes wird weniger stark beeinflußt. **Fig. 3** zeigt den Effekt noch deutlicher durch spektrale Auftragung der a/s-Werte. Insgesamt ergibt sich durch das erfindungsgemäße Verfahren eine wesentliche Verbesserung der optischen Eigenschaften des Leuchtstoffpulvers. Diese Verbesserung bleibt bei der Verwendung der Leuchtstoffzubereitung zur Herstellung eines Bildschirmes erhalten; der Gewinn kann wahlweise in Farbbildröhren mit erhöhtemm Kontrast oder mit höherer Helligkeit bei unverändertem Kontrast umgesetzt werden.

## Patentansprüche

1. Verfahren zur Herstellung einer Leuchtstoffzubereitung aus einem Leuchtstoff mit einer Pigmentbeschichtung aus Hämatit, bei welchem in einem ersten Schritt der Leuchtstoff mit einer eisenhaltigen Ausgangsverbindung für Hämatit beschichtet wird, und in einem Zweiten Schritt der Leuchtstoff mit der Beschichtung kalziniert wird, wobei die eisenhaltige Ausgangsverbindung für Hämatit in Hämatit umgewandelt wird,
dadurch gekennzeichnet,
daß in einer Atmosphäre aus einem Gasgemisch aus Wasserdampf und einem oxidierenden Gas kalziniert wird.

2. Verfahren zur Herstellung einer Leuchtstoffzubereitung gemäß Anspruch 1,
dadurch gekennzeichnet,
daß die eisenhaltige Ausgangsverbindung für Hämatit ein Oxid, Hydroxid, Oxidhydrat, Sulfid oder Phosphat des zweiwertigen oder dreiwertigen Eisens oder einem Gemisch solcher Verbindungen ist.

3. Verfahren zur Herstellung einer Leuchtstoffzubereitung gemäß Anspruch 1,
dadurch gekennzeichnet,
daß das oxidierende Gas Luft, Sauerstoff, nitrose Gase oder ein sauerstoffhaltiges Gasgemisch ist.

4. Verfahren zur Herstellung einer Leuchtstoffzubereitung gemäß Anspruch 1,
dadurch gekennzeichnet,
daß in einer Atmosphäre aus strömendem Gasgemisch kalziniert wird.

5. Verfahren zur Herstellung einer Leuchtstoffzubereitung gemäß Anspruch 1,
dadurch gekennzeichnet,
daß in dem Gasgemisch der Wasserdampfpartialdruck ≥ 25 % des Gesamtdruckes beträgt.

6. Verfahren zur Herstellung einer Leuchtstoffzubereitung gemäß Anspruch 1,
dadurch gekennzeichnet,
daß in dem Gasgemisch der Wasserdampfpartialdruck 60 bis 80 % des Gesamtdruckes beträgt.
